Europäisches Patentamt

European Patent Office

Office européen des brevets

(19)

(11) **EP 1 130 308 A2**

# (12) EUROPEAN PATENT APPLICATION

(43) Date of publication:
**05.09.2001 Bulletin 2001/36**

(51) Int Cl.⁷: **F16T 1/20**

(21) Application number: **01301997.1**

(22) Date of filing: **05.03.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventor: **CLARKE, Douglas Cecil**<br>**Stroud Gloucestershire GL5 4LB (GB)** |
| (30) Priority: **04.03.2000 GB 0005169** | (74) Representative: **Higgins, Michael Roger**<br>**A.R. Davies & Co.**<br>**27, Imperial Square**<br>**Cheltenham Glos. GL50 1RQ (GB)** |
| (71) Applicant: **CLARKE, Douglas Cecil**<br>**Stroud Gloucestershire GL5 4LB (GB)** | |

(54) **Improvements in or relating to pneumatic systems**

(57)      A pneumatic system having an automatic drain, the system operating at an air pressure higher than ambient air pressure and the drain comprising a column element (2), having a fixed cap portion (1), a float (13) slidingly supported by the column element (2) for reciprocal movement on the column element (2), and a main discharge valve (18) for connecting the pneumatic system to drain. The column element (2) also has a bore (10) which is maintained at ambient or substantially ambient air pressure when the main discharge valve (18) is closed, and a trigger valve (22) by which the main discharge valve (18) can be operated. The trigger valve (22) is operable by movement of the float (13) and includes means for setting a predetermined net force which in use acts on the float (13) and which is generated by the pressure differential that exists between the system pressure and ambient pressure. The float (13) may also include first and second vent mechanisms (32 and 34) by which fluid can be discharged from the interior of the float (13) in the event of a sudden or dramatic reduction in the pressure of the system.

FIG 5

## Description

This invention relates to a pneumatic system having an automatic drain.

In the field of compressed air supply systems, it is common to encounter a problem whereby water is transported into the pneumatic system from the compressor. The water propagates through the piping and must be removed before reaching the points of use. It is common to use filter elements mounted in modules, which often are part of a cluster of additional devices such as pressure regulators and oil mist lubricators. The water agglomerates on the surface of a hydrophobic element and is collected in the usually transparent filter bowl below the diffuser shield and filter assembly.

It is clear that some method must be found for removing the water from the bowl before it reaches a level such that the filter becomes flooded. A device can be added to the bottom of the bowl which automatically detects the rising level of the water and triggers an ejection mechanism which uses the system's own compressed air to drive the water from the bowl into the ambient beyond - such a device is called an auto-drain. A number of patents have been granted e.g. US 5636655, US 5595210, US 4082107 and several commercial devices are available.

The water, which collects in the bowl, is rarely clean - it is normal to find oil and particles of dirt and/or rust. In addition, algae and other organic growths may be found. Such contaminants can block small orifices, induce suction in sliding pads or chemically degrade certain materials.

To trigger an ejection event, auto-drain designs typically make use of a light polymer float, which is free to move vertically, as a means of detecting the rising water level. As the water level rises, the flotation force causes the float to act against a valve mechanism of the trigger valve such that, when a certain depth of water is reached, the trigger valve is opened, allowing the system pressure to act on a main discharge valve which, upon opening, vents the water together with some compressed air into the ambient beyond.

In order for the float to be effective, it must displace as much water as possible to generate maximum flotation force and must be as light as possible. The physical size of the float is limited because it must fit into the smallest bowls commercially available. Because of these physical constraints, the maximum flotation force being given by the weight of water displaced by the float minus the weight of the float itself is usually less than 10 grms.

In all known products, this small force has to be mechanically amplified by use of a light lever and fulcrum to ensure reliable operation of the trigger valve. This is necessary because of the force exerted by the system pressure which acts to keep the trigger valve closed. For a circular valve orifice of diameter D mm, the closing force is:

$$F = 8PD^2$$

where F is in grms force, P is the pressure difference across the valve in bars and D is in mm. Thus, the force acting on a trigger valve orifice of diameter 0.5 mm at a pressure differential of 12 bar is 24 grms. In this example, the trigger valve would typically require a 4:1 or 5:1 lever to ensure that a float generating 6 grms of lift would operate the trigger valve over the system pressure range.

The problem with this type of arrangement is that, as the relative supply pressure can lie anywhere in the range 1 bar to 12 bar, even with a lever, the depth of water required to operate the auto drain will vary. The most common way of reducing this variability is to make the diameter of the trigger valve orifice very small, thereby reducing the relative effect of the pressure force. However, this creates manufacturing and reliability problems, because a small orifice can become blocked with oil or debris and the surface tension of water becomes an issue.

The present invention seeks to overcome this problem.

According to a first aspect of the present invention, there is provided a pneumatic system having an automatic drain, the system operating at an air pressure higher than ambient air pressure and the drain comprising a column element, having a fixed cap portion, a float slidingly supported by the column element for reciprocal movement on the column element, and a main discharge valve for connecting the pneumatic system to drain, the column element also having a bore which is maintained at ambient or substantially ambient air pressure when the main discharge valve is closed, and a trigger valve by which the main discharge valve can be operated, the trigger valve being operable by movement of the float and including means for setting a predetermined net force which in use acts on the float and which is generated by the pressure differential that exists between the system pressure and ambient pressure.

Preferable and/or optional features of the present invention are set out in claims 2 to 10 inclusive.

According to a second aspect of the present invention, there is provided a pneumatic system having an automatic drain, the system operating at an air pressure higher than ambient air pressure and the drain comprising a hollow or substantially hollow float, the float including a first venting mechanism by which fluid can be discharged from the interior of the float, and a second venting mechanism by which fluid can be discharged from the interior of the float in the event of a sudden or dramatic reduction in the pressure of the system.

Preferably, the second venting mechanism comprises one or more apertures in an in use upper surface of the float and a cover or skirt element which is provided on the said upper surface and which covers the apertures, the apertures and the cover or skirt forming a one-way valve by which fluid can exit the interior of the float.

The invention will now be more particularly described, by way of example, with reference to the accompanying drawings, wherein :

Figure 1 is a longitudinal cross-section showing a prior art auto-drain of a pneumatic system;

Figure 2 is an enlarged schematic view of a first embodiment of a trigger valve of an auto-drain, in accordance with the first aspect of the present invention;

Figure 3 is an enlarged schematic view of a second embodiment of a part of the trigger valve, in accordance with the first aspect of the present invention;

Figure 4 is a longitudinal cross-section through a third embodiment of the auto-drain, in accordance with the first aspect of the present invention; and

Figure 5 is a view similar to Figure 4 showing a fourth embodiment of the auto-drain, in accordance with the first aspect of the present invention, and a fifth embodiment of the auto-drain, in accordance with the second aspect of the present invention.

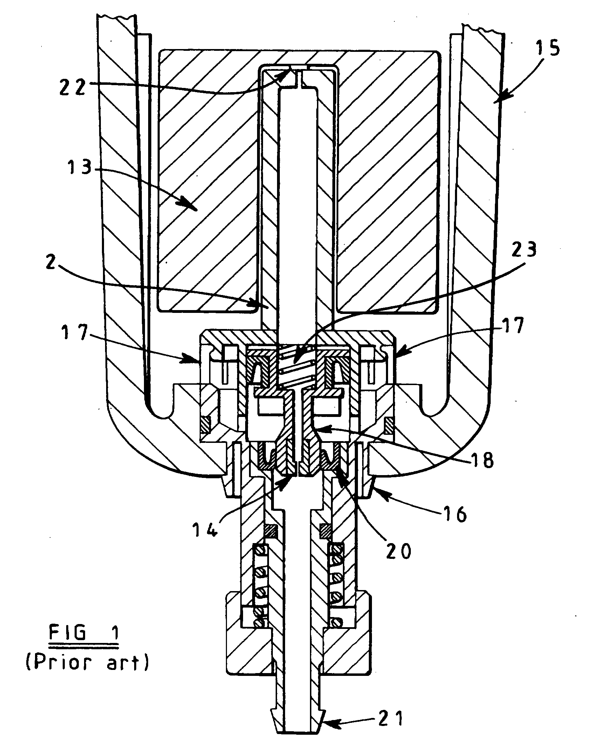

Figure 1 shows the concept of a typical commercially-available auto-drain which can be inserted into the bottom of a filter bowl 15, where it is retained by catches 16.

A central cylindrical column 2 is used to support a float 13 which can slide up and down the column 2 by a small distance of the order of a millimetre. The bowl is pressurised to the system pressure.

Water which accumulates in the bowl 15 communicates via water drain channels 17 with the main discharge valve 18 which is illustrated in the sealed position. Sealing is effected by a lip seal 20 which acts against the side of the nose of the valve 18. When the auto-drain is triggered, valve 18 moves downwards such that the bulbous nose of the valve 18 moves past the lip seal 20, allowing both water and compressed air to discharge through the nozzle 21 to ambient.

The outside surface of column 2 is exposed to the system pressure and the inside volume communicates with ambient pressure via an aperture 14. A differential pressure therefore exists across the valve 18 which holds the valve in the position shown. This differential pressure is greatly reduced when the trigger valve 22 is opened by the action of the float 13, allowing the system pressure to act differentially across the bulbous nose of the valve 18, causing it to move to the open position. A spring 23 is provided to open the valve automatically during system shut-down when the system pressure reduces to ambient.

The subject of this invention is the detailed design of the trigger valve 22 shown diagrammatically in Figure 1

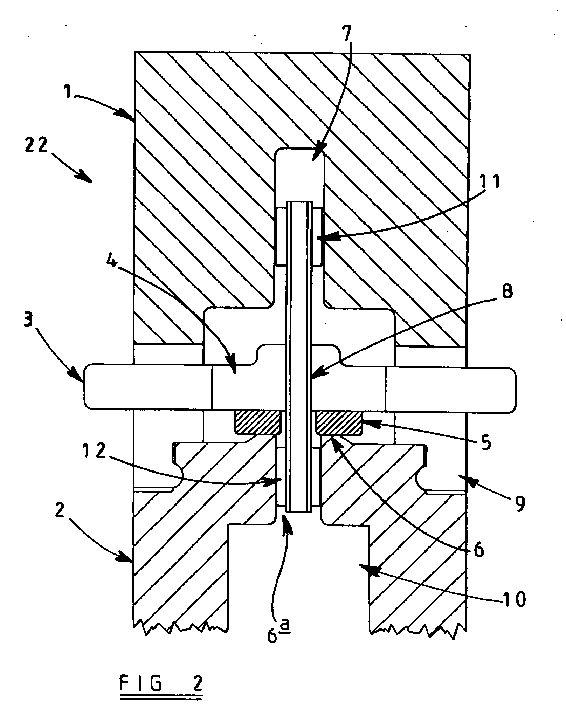

Referring to Figure 2, the top of the column 2 is shaped to provide a valve seat 6, having an opening to a bore 6a. The valve seat 6 is of defined dimensions and of a circumferential profile allowing a top cap portion 1 to be snapped into position by means of an interlocking profile 9.

Two diametrically opposed apertures in the side of cap 1 allow passage to two lifting bars 3, which form part of the float 13 and which project solidly from the side of a seal holder 4.

A soft polymer seal pad 5 is firmly attached to the underside of the seal holder 4, or may be securely fitted into a recess (not illustrated) in the seal holder 4.

Seal holder 4 is firmly attached to an elongate element, typically a metal capillary tube, 8 which is mounted coaxially with the seal holder 4 with the elongate capillary tube 8 passing through an aperture in the valve pad 5. The lifting bars 3 provide a means of lifting the valve pad 5 off the valve seat 6, thereby admitting compressed air at the system pressure to a cavity or bore 10 of the column 2, which serves to operate the main discharge valve 18.

The upper end of the capillary tube 8 extends into a cylindrical blind hole or chamber 7 in the top cap portion 1 which is coaxial with the valve bore 6a. The elongate capillary tube 8 is fitted with a securely attached element 11 which acts as a piston head in the bore of chamber 7.

While illustrated as a sleeve in Figure 2, piston element 11 can take diverse forms such as the cylindrical sleeve illustrated, or have a spherical profile, or may have a more complex shape such as part spherical and part oblate. It is only important that the shape have an outside diameter such that the piston element 11 can slide with minimum clearance in the bore of chamber 7. The shape can, with advantage, take a spherical form at that part of its external surface which slides against the surface of the bore of chamber 7, this shape retaining minimum clearance even when angular misalignment of the capillary tube 8 with respect to the centreline of the bore, is present.

The lower end of the elongate capillary tube 8 can be provided with a second sliding or guide element 12 which acts as a guide in the valve bore 6a. This element can take a wide variety of forms and fits, including:

i the same choices of profile and shape as described for piston element 11;
ii the fit of guide element 12 to the bore 6a can have minimum clearance in the bore 6a of valve seat 6;
iii the fit of guide element 12 can be a loose clearance in the bore 6a of valve seat 6;
iv guide element 12 can be omitted completely;
v guide element 12 can be securely bonded to the elongate capillary tube 8;

vi guide element 12 can be a separate component pushed onto the elongate capillary element during assembly.

In all cases where guide element 12 is fitted, the guide element 12 should be grooved or otherwise profiled to allow easy passage of compressed air past the element, especially when the trigger valve 22 is opened. This is a key difference between piston element 11 and guide element 12 — the piston element 11 is designed to minimise the leakage of gas past the piston element 11, while guide element 12 is designed to allow the easy passage of gas past the guide element 12.

The primary function of guide element 12 is to hinder or prevent angular misalignment of the valve assembly when it is lifted by means of one or both of the lifting bars 3. The consequences of angular misalignment can be to cause unwanted friction at the piston element 11 or even jamming of the piston element 11, and tilting of the valve pad 5 with respect to its valve seat 6 resulting in leakage at the trigger valve 22.

In a preferred embodiment (not shown), the effects of angular misalignment are minimised by giving piston element 11 a spherical profile, guide element 12 a grooved spherical profile with a loose clearance in the bore 6a of the valve seat 6 and by making valve pad 5 of a very soft elastic material such that the pad can comply with the valve seat 6 for very small angular misalignment. Guide element 12 can be push-fitted onto the elongate capillary tube 8 during assembly. Since the force available to deform the valve pad is the weight of the float assembly 13 plus or minus out-of-balance forces, the valve seat 6 must have an area sufficiently small that effective sealing is achieved, but cannot be so small that permanent deformation or other mechanical damage occurs to the sealing area of the valve pad 5.

The system pressure develops a force equal to the pressure difference across the valve pad 5 and valve seat 6 of the trigger valve 22 multiplied by the area of the opening of the valve seat 6 - and a nearly equal and opposite force across the piston element 11. This results in the elongate capillary tube 8 experiencing a total tension force equal to twice the force across the trigger valve 22. However, since these forces are balanced or substantially balanced, i.e. the net force is zero or substantially zero, the force required to open the trigger valve 22 by lifting the seal pad 5 is small and equal to the mass of the lifting bars 3 (float 13), seal holder 4, seal pad 5, elongate tube 8 and piston element 11 plus or minus the residual out-of-balance force depending on whether the sense of any residual force is downwards towards the valve seat or upwards towards the balance piston.

For a circular valve orifice of diameter D, the closing force due to air pressure is:

$$F = 8PD^2$$

where F is in grms (force), P is the pressure difference across the valve in bar and D is in mm. As a numerical example, the force acting on a trigger valve orifice of diameter 1.0 mm at a pressure differential of 12 bar is 96 grms. If the specification for the diameter of the chamber 7 were to be set at $1.0 \pm 0.01$ mm, the balance force could lie in the range 94.1 gm to 97.9 gm, resulting in a residual out-of-balance force in the range $\pm 1.9$ gm, or a span of 3.8 gm. This represents a substantial fraction of the available net lift from the float and shows that high precision is required in manufacturing the trigger valve orifice or bore 6a and the bore of the chamber 7. It is clear that the possible range of values for the residual force increases with the square of the diameter of these bores.

Since the pressure ratio across piston element 11 will almost always be greater than 2:1, the annular clearance gap around the periphery of the piston element 11 will be in choked flow. Under this condition, the total gas throughput through the annular leak will be proportional to system pressure and to the area of the clearance leak, a result which is well known in gas fluid dynamics. In this flow regime, the annular leak can be numerically equated to an equivalent circular aperture. As a numerical example, if the piston diameter is 1 mm and the radial clearance is 0.025 mm total radial clearance 50 microns, the area of the leak is 0.078 $mm^2$, equivalent to a circular aperture of diameter 0.32 mm. While this degree of leakage is substantial, it can be tolerated or neglected in normal compressed air systems.

While the effect of pressure-balancing the trigger valve 22 is to allow very light forces within the range generated directly by buoyancy forces on the float 13 to operate the trigger valve 22, a lever arrangement of design obvious to those skilled in the art can be used to mechanically amplify the available forces from the float and improve the sealing effectiveness of the trigger valve 22. For instance, the use of a yoke hinged about a pivot located on the reverse side of column 2 and encompassing each of the lifting bars 3 to connect to the edge of the float 13, will mechanically amplify the weight of the float 13 in the absence of water and will also amplify the buoyancy force when water is present.

The advantage of the arrangement is that the depth of water required to operate the auto-drain remains fairly constant, regardless of system pressure, while enabling a large aperture at the trigger valve 22 which will not be susceptible to blockage from oil or debris.

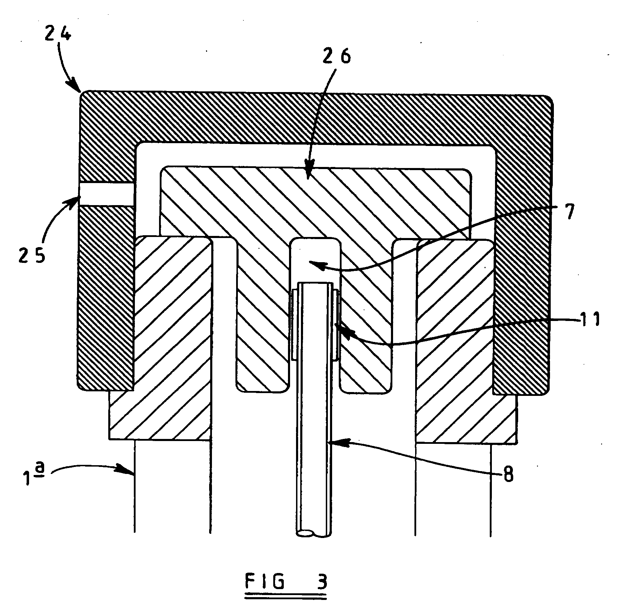

The use of a yoke as a lever allows an additional method of self-aligning the trigger valve 22 assembly — this is shown in Figure 3. The component la has the same general form as the top cap 1 illustrated in Figure 2 but the end face is removed leaving a planar surface on which a floating carrier 26 is free to move in any radial direction. The carrier 26 contains the previously described blind bore chamber 7 in which slides the balance piston element 11 with minimum clearance.

The carrier 26 is loosely restrained by a press-fit cap 24 which contains an aperture 25 which allows pressure equalisation across the carrier 26. The normal force on the carrier 26 is equal to the pressure force developed across the piston element 11. For example, with a 12 bar differential pressure across the piston element 11 of diameter 1 mm, the normal force is 96 gms. Once the carrier 26 has assumed a position on the end face of the cap la, the radial force developed by the float 13 and elongate capillary tube 8 will be wholly inadequate to move the carrier 26. However, when system pressure is released (for instance, when the air system is turned off and the system pressure falls to ambient), the weight of the float 13 acting upon the elongate capillary tube 8 will cause the piston element 11 to take its natural position and the carrier 26 will move with it. The next time system pressure is restored, the carrier 26 will be fixed in this position by the normal force and the elongate tube 8 will experience minimum misalignment forces.

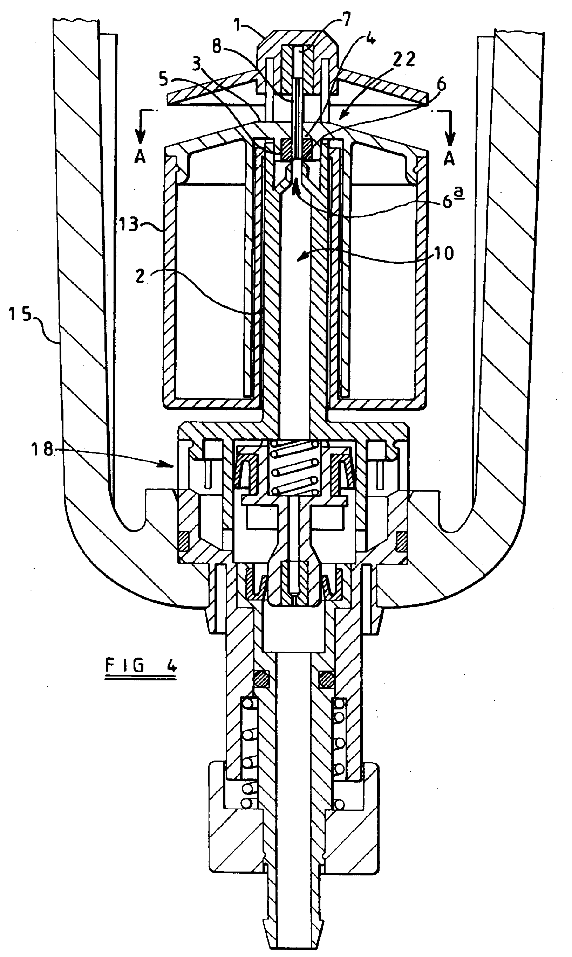

Referring to Figure 4, a third embodiment of the present invention is shown therein. This embodiment differs only in that the elongate tube 8 is not provided with either piston element 11 or guide element 12. In this case, the outer surface of the elongate tube 8 itself is received as a close sliding fit within the bore of the chamber 7.

The other end of the elongate tube 8, which is opposite the end received in the chamber 7, now does not extend through the opening of the bore 6a of the valve seat 6. Instead, the valve pad 5 is adapted to fluid tightly receive the said other end of the elongate tube 8, and as such is held by the seal holder 4. Thus, the valve pad 5 can still be seated on the opening of the valve seat 6 in fluid tight fashion as previously described, with negligible misalignment of the tubular elongate tube 8 with the opening of the valve seat 6.

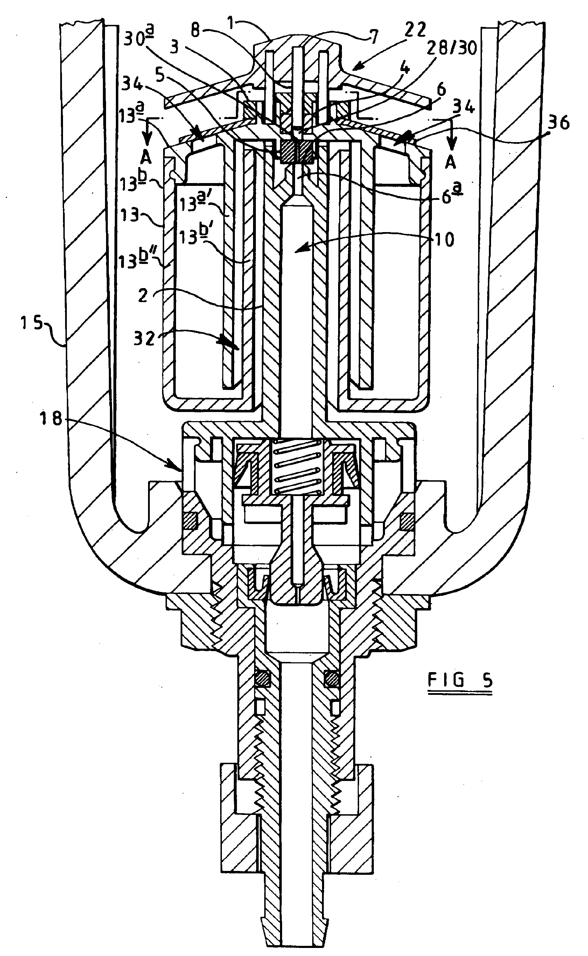

Referring to Figure 5, a fourth embodiment of the present invention is shown therein. In this case, the elongate tube 8 is replaced by a solid or substantially solid elongate element, typically in the form of a pin. One end of the elongate element 8 is fixedly held by the cap portion 1 in the chamber 7.

A further chamber 28, having an open bore 30, is formed coaxially with the bore 6a of the valve seat 6 in seal holder 4 of the lifting bars 3 of the float 13. The other end of the elongate element 8, opposite the end held by the cap portion 1, is fluid tightly received in the open bore 30 of the chamber 28 as a close sliding fit.

The open end 30a of the open bore 30 is of reduced diameter. This is typically achieved by the open end 30a including the valve pad 5. The valve pad 5, in this case, has a through opening of a diameter which is less than the diameter of the open bore 30.

Thus, the valve pad 5 can still be seated on the opening to the bore 6a of the valve seat 6 in fluid tight fashion as previously described, with negligible misalignment of the solid elongate element 8 with the opening of the valve seat 6.

In the embodiments described above, when the diameter of the chamber 7,28 and the diameter of the opening to the valve seat 6 are equal, the net force generated due to the pressure differential that exists between the pressure at which the system is pressurised to and ambient pressure is zero or substantially zero.

However, when the diameter of the chamber 7,28 is larger than the diameter of the opening of the valve seat 6, the said net force will tend to act on the float 13 in the direction towards the cap portion 1.

When the diameter of the chamber 7,28 is smaller than the diameter of the opening of the valve seat 6, the said net force will tend to act on the float 13 in the direction away from the cap portion 1.

As can thus be seen, it is possible to bias or compensate the trigger valve 22 if so required.

Figure 5 also shows a fifth embodiment of the automatic drain of the present invention. Hollow or substantially hollow floats 13 are known. These are typically moulded from plastics material and are thin walled to cut down on the cost of material. The float 13 may be formed in two parts 13a and 13b, in use snap-fittably inter-engaged. The part 13a is typically formed with a wall element 13a', and the part 13b is typically formed with concentric inner and outer wall elements 13b' and 13b", respectively. When inter-engaged, the wall element 13a' is concentrically received between inner and outer wall elements 13b' and 13b". However, neither wall 13a' nor inner wall 13b', in use, extend to abut part 13b or part 13a, respectively. By this arrangement, the float 13 is provided with a vent mechanism 32 by which fluid, unintentionally held within the float 13 can be discharged, typically when the system pressure is reduced.

However, a problem occurs when the system pressure reduces instantaneously or quickly, such as when a line in the pneumatic system breaks. In this case, the pressurised air held in the hollow float is unable to vent through the vent mechanism 32 quickly enough, causing the float to fracture or explode.

The float 13 is therefore provided with a second venting mechanism comprising a one-way valve, which typically takes the form of a flap valve having secondary vents or openings 34 and a vent cover or skirt 36 which in use lies completely over the secondary vents or openings 34. The vent cover 36 is typically formed from flexible rubber material and is provided to lie on the in use upper surface of the part 13a of the float 13. One edge of the vent cover 36 is attached to the float 13, to prevent it being dislodged, while the other edge is free.

In use, during a dramatic or sudden system pressure reduction, pressurised air trapped in the hollow float 13 can vent quickly through the one-way valve, i. e. through the secondary vents or openings 34 by forcibly displacing the free edge of the vent cover or skirt 36. After venting, the cover or skirt 36 flaps back down, thereby repositioning itself and preventing or inhibiting fluid access to the interior of the float 13 via the vents or openings 34.

With the automatic drain described above, it is possible to provide a trigger valve that requires a reduced force to be opened. As such, the necessity of a lever mechanism to amplify a floatation force can be dispensed with.

It is also possible to provide a hollow float that has a greater resistance to breakage when subjected to a sudden or dramatic system pressure reduction.

The embodiments described above are given by way of examples only, and various modifications will be apparent to persons skilled in the art without departing from the scope of the invention.

## Claims

1. A pneumatic system having an automatic drain, the system operating at an air pressure higher than ambient air pressure and the drain comprising a column element, having a fixed cap portion, a float slidingly supported by the column element for reciprocal movement on the column element, and a main discharge valve for connecting the pneumatic system to drain, the column element also having a bore which is maintained at ambient or substantially ambient air pressure when the main discharge valve is closed, and a trigger valve by which the main discharge valve can be operated, the trigger valve being operable by movement of the float and including means for setting a predetermined net force which in use acts on the float and which is generated by the pressure differential that exists between the system pressure and ambient pressure.

2. A pneumatic system as claimed in claim 1, wherein the trigger valve has a valve seat having an opening to the bore of the column element, and the net force setting means includes an elongate element coaxially aligned with the opening of the valve seat and a chamber in which one end of the elongate element is received as a close sliding fit.

3. A pneumatic system as claimed in claim 2, wherein the chamber is a blind bore located in the cap portion of the column element, and the elongate element comprises a tubular element which is fluid tightly held to move in fixed relationship with the float.

4. A pneumatic system as claimed in claim 3, wherein a part of the float is adapted to seat, in fluid tight fashion, on the said valve seat when the trigger valve is closed.

5. A pneumatic system as claimed in claim 4, wherein the other end of the elongate element, opposite the said one end, extends through the opening of the valve seat.

6. A pneumatic system as claimed in claim 5, wherein the said one end of the elongate element includes a piston element.

7. A pneumatic system as claimed in claim 2, wherein the elongate element is a solid or substantially solid pin and its other end, opposite the said one end, is fixedly held by the cap portion of the column element, the chamber being an open bore disposed in the float, the open end of the open bore being of reduced diameter relative to the open bore and being adapted to seat, in fluid tight fashion, on the said valve seat when the trigger valve is closed.

8. A pneumatic system as claimed in any one of claims 2 to 7, wherein, when the diameter of the chamber and the diameter of the opening of the valve seat are equal, the net force acting on the float is zero or substantially zero.

9. A pneumatic system as claimed in any one of claims 2 to 7, wherein, when the diameter of the chamber is larger than the diameter of the opening of the valve seat, the net force tends to act on the float in the direction towards the cap portion.

10. A pneumatic system as claimed in any one of claims 2 to 7, wherein, when the diameter of the chamber is smaller than the diameter of the opening of the valve seat, the net force tends to act on the float in the direction away from the cap portion.

11. A pneumatic system having an automatic drain, the system operating at an air pressure higher than ambient air pressure and the drain comprising a hollow or substantially hollow float, the float including a first venting mechanism by which fluid can be discharged from the interior of the float, and a second venting mechanism by which fluid can be discharged from the interior of the float in the event of a sudden or dramatic reduction in the pressure of the system.

12. A pneumatic system as claimed in claim 11, wherein the second venting mechanism comprises one or more apertures in an in use upper surface of the float and a cover or skirt element which is provided on the said upper surface and which covers the apertures, the apertures and the cover or skirt forming a one-way valve by which fluid can exit the interior of the float.

FIG 1
(Prior art)

FIG 2

FIG 3

FIG 4

FIG 5